# DEMANDE DE BREVET EUROPEEN

(11) **EP 4 497 674 A1**
(43) Date de publication de la demande: **29.01.2025**
(21) Numéro de dépôt: 24188738.9
(22) Date de dépôt: 16.07.2024
(51) Int. Cl.: B64C 1/36, H01Q 1/12, H01Q 1/28

(54) **AÉRONEF COMPRENANT UNE STRUCTURE PRIMAIRE AINSI QU'UNE PLATINE EXTÉRIEURE RELIÉE À LA STRUCTURE PRIMAIRE**

(30) Priorité: 24.07.2023 FR 2307918
(71) Demandeur: Airbus SAS, 31700 Blagnac Cedex (FR)
(72) Inventeur: GUINARD, David, 31700 BLAGNAC (FR); LAGARRIGUE, Alain, 31700 BLAGNAC (FR); CHAAR, Hala, 31700 BLAGNAC (FR); BARDET, Aurélien, 31700 BLAGNAC (FR)
(74) Mandataire: Fantin, Laurent

(57) **Abrégé**

L'invention a pour objet un aéronef comportant :
- une paroi extérieure (32) séparant des zones intérieure et extérieure (ZI, ZE),
- une structure primaire (34), positionnée dans la zone intérieure (ZI), comportant une pluralité de premiers renforts (36) orientés selon une première direction (X) et une pluralité de deuxièmes renforts (38) orientés selon une deuxième direction (Y) sensiblement perpendiculaire à la première direction (X),
- une platine (40), positionnée dans la zone extérieure (ZE), reliée à la structure primaire (34) par au moins un système de liaison (42, 42', 42").

La structure primaire (34) étant plus rigide que la paroi extérieure (32), en fonctionnement, la platine (40) n'est pas soumise aux déformations de la paroi extérieure (32) en raison de la pressurisation de la zone intérieure (ZI).

## Description

La présente demande se rapporte à un aéronef comprenant une structure primaire ainsi qu'une platine extérieure reliée à la structure primaire.

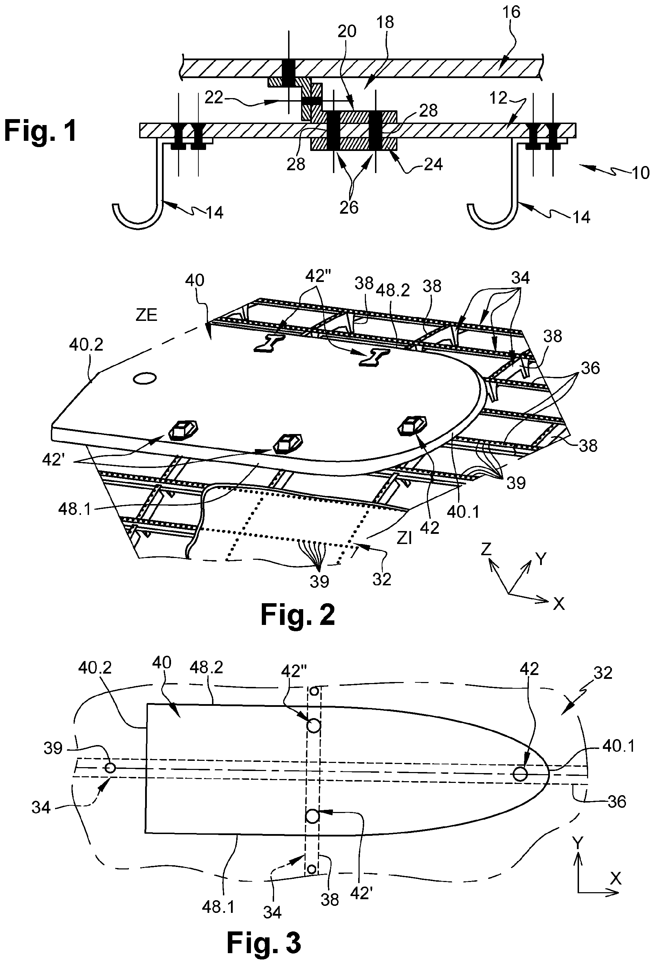

Selon un mode de réalisation visible sur la figure 1, un aéronef comprend un fuselage 10 qui s'étend entre des pointes avant et arrière. Pour la suite de la description, une direction longitudinale correspond à une direction parallèle à un axe longitudinal de l'aéronef, passant par les pointes avant et arrière. Un plan transversal est un plan perpendiculaire à l'axe longitudinal de l'aéronef. Les notions avant/arrière font référence au sens d'écoulement des flux d'air à l'extérieur du fuselage en vol, qui vont de l'avant vers l'arrière.

Le fuselage 10 de l'aéronef comprend une paroi extérieure 12 qui forme la peau extérieure de l'aéronef ainsi qu'une structure primaire composée de renforts longitudinaux (également appelés lisses), sensiblement parallèles à la direction longitudinale X, et de renforts transversaux 14 (également appelés cadres) positionnés dans des plans transversaux.

Selon une configuration, l'aéronef comprend au moins une platine 16, configurée pour supporter au moins une antenne, positionnée à l'extérieur du fuselage 10 et reliée à ce dernier par une liaison rigide 18.

Selon un mode de réalisation, la liaison rigide 18 comprend au moins une ferrure 20 solidaire de la paroi extérieure 12 du fuselage 10 et directement ou indirectement reliée à la platine 16 par au moins un élément de liaison 22. Pour chaque ferrure 20, la liaison rigide 18 comprend une contreplaque 24 plaquée contre la surface intérieure de la paroi extérieure 12 du fuselage ainsi que plusieurs éléments de fixation 26 (comme des boulons ou des rivets par exemple) reliant la ferrure 20 et la contreplaque 24 en traversant la paroi extérieure 12. Ainsi, la paroi extérieure 12 comprend un orifice traversant 28 pour chaque élément de fixation 26.

Ce mode de réalisation n'est pas satisfaisant pour les raisons suivantes. En fonctionnement, la paroi extérieure 12, sous l'effet de la pressurisation de l'aéronef, se dilate et génère des contraintes sur la platine 16 qui doit être dimensionnée pour les reprendre, ce qui induit généralement une augmentation de la masse embarquée.

Selon un autre inconvénient, l'installation des ferrures 20 et des contreplaques 24 endommage la paroi extérieure 12 (en raison de la présence des orifices traversants 28 spécifiques au maintien de la platine 16) qui doit être réparée lorsque la platine est retirée ou changée.

La présente invention vise à remédier à tout ou partie des inconvénients de l'art antérieur. A cet effet, l'invention a pour objet un aéronef comportant :
- une paroi extérieure séparant des zones intérieure et extérieure,
- une structure primaire, positionnée dans la zone intérieure, comportant une pluralité de premiers renforts orientés selon une première direction et une pluralité de deuxièmes renforts orientés selon une deuxième direction sensiblement perpendiculaire à la première direction,
- des éléments de fixation reliant la paroi extérieure et la structure primaire,
- une platine positionnée dans la zone extérieure.

Selon l'invention, la platine est reliée à la structure primaire par au moins un système de liaison.

Contrairement à l'art antérieur, la platine n'est pas reliée à la paroi extérieure mais à la structure primaire qui est plus rigide que la paroi extérieure. Ainsi, en fonctionnement, la platine n'est pas soumise aux contraintes liées aux déformations de la paroi extérieure produites en raison de la pressurisation de la zone intérieure.

Selon une autre caractéristique, le système de liaison comprend au moins une partie reliée à la structure primaire par des éléments de fixation, au moins un des éléments de fixation étant un élément de fixation reliant la paroi extérieure et la structure primaire.

Selon une autre caractéristique, l'aéronef comprend au moins un premier système de liaison relié à au moins un premier renfort et configuré pour assurer une reprise des efforts selon au moins la première direction ainsi qu'au moins un deuxième système de liaison relié à au moins un deuxième renfort et configuré pour assurer une reprise des efforts selon au moins la deuxième direction.

Selon une autre caractéristique, le premier système de liaison comprend une première partie solidaire de la structure primaire, une deuxième partie solidaire de la platine ainsi qu'au moins un axe de pivotement, orienté parallèlement à la deuxième direction, reliant les première et deuxième parties.

Selon une autre caractéristique, les première et deuxième parties ainsi que l'axe de pivotement sont configurés pour former une liaison pivot glissant qui permet un déplacement, entre les première et deuxième parties, parallèle à la deuxième direction.

Selon une autre caractéristique, les première et deuxième parties ainsi que l'axe de pivotement sont configurés pour former une liaison rotule.

Selon une autre caractéristique, le deuxième système de liaison comprend une première partie solidaire de la structure primaire, une deuxième partie solidaire de la platine, une biellette, un premier axe de pivotement (orienté parallèlement à la première direction) reliant la première partie et la biellette ainsi qu'un deuxième axe de pivotement (orienté parallèlement à la première direction) reliant la deuxième partie et la biellette.

Selon une autre caractéristique, la deuxième partie, la biellette et le deuxième axe de pivotement sont configurés pour former une liaison pivot glissant permettant un déplacement, entre la deuxième partie et la biellette, parallèle à la première direction. Selon une autre caractéristique, la première partie, la biellette et le premier axe de pivotement sont configurés pour former une liaison pivot glissant qui permet un déplacement, entre la première partie et la biellette, parallèle à la première direction.

Selon une autre caractéristique, la platine présente une extrémité avant, une extrémité arrière ainsi que des premier et deuxième bords longitudinaux reliant les extrémités avant et arrière. En complément, l'aéronef comprend un unique premier système de liaison relié à au moins un premier renfort et configuré pour assurer une reprise des efforts selon au moins la première direction, au moins un deuxième système de liaison relié à au moins un deuxième renfort, configuré pour assurer une reprise des efforts selon au moins la deuxième direction et situé à proximité du premier bord longitudinal, ainsi qu'au moins un troisième système de liaison relié à au moins un deuxième renfort, configuré pour assurer une reprise des efforts selon au moins la deuxième direction et situé à proximité du deuxième bord longitudinal. Selon une autre caractéristique, chaque troisième système de liaison comprend une première partie solidaire de la structure primaire, une deuxième partie solidaire de la platine ainsi qu'au moins un axe de pivotement, orienté parallèlement à la première direction, reliant les première et deuxième parties.

Selon une autre caractéristique, les première et deuxième parties ainsi que l'axe de pivotement sont configurés pour former une liaison pivot glissant qui permet un déplacement entre les première et deuxième parties parallèle à la première direction.

Selon une autre caractéristique, l'aéronef comprend au moins un couple de deuxième et troisième systèmes de liaison relié au même deuxième renfort.

D'autres caractéristiques et avantages ressortiront de la description de l'invention qui va suivre, description donnée à titre d'exemple uniquement, en regard des dessins annexés parmi lesquels :
- La figure 1 est une coupe longitudinale d'une partie d'un fuselage d'un aéronef équipé d'une platine extérieure illustrant un mode de réalisation de l'art antérieur,
- La figure 2 est une vue en perspective d'une partie d'un fuselage d'un aéronef équipé d'une platine extérieure illustrant un mode de réalisation de l'invention,
- La figure 3 est une vue de dessus d'une platine illustrant un mode de réalisation de l'invention,
- La figure 4 est une vue en perspective d'un premier système de liaison reliant une platine et une structure d'un aéronef illustrant un mode de réalisation de l'invention,
- La figure 5 est une vue de dessus du premier système de liaison visible sur la figure 4,
- La figure 6 est une vue de face du premier système de liaison, visible sur la figure 4, à l'état démonté,
- La figure 7 est une coupe longitudinale du premier système de liaison visible sur la figure 4,
- La figure 8 est une vue en perspective d'un deuxième système de liaison reliant une platine et une structure d'un aéronef qui illustre un mode de réalisation de l'invention,
- La figure 9 est une coupe transversale du deuxième système de liaison visible sur la figure 8,
- La figure 10 est une vue en perspective d'un troisième système de liaison reliant une platine et une structure d'un aéronef qui illustre un mode de réalisation de l'invention,
- La figure 11 est une coupe transversale du deuxième système de liaison visible sur la figure 10.

Selon un mode de réalisation visible sur la figure 2, un aéronef comprend une paroi extérieure 32 ainsi qu'une structure primaire 34 comportant une pluralité de premiers renforts 36 orientés selon une première direction X et une pluralité de deuxièmes renforts 38 orientés selon une deuxième direction Y sensiblement perpendiculaire à la première direction X. La paroi extérieure 32 est reliée à la structure primaire 34 par des éléments de fixation 39 comme des rivets ou des boulons par exemple. A cet effet, la paroi extérieure 32 comprend un orifice traversant pour chaque élément de fixation 39.

Selon une application, la paroi extérieure 32 et la structure primaire 34 forment le fuselage de l'aéronef, les premiers renforts 36, appelés lisses, étant orientés selon la direction longitudinale, les deuxièmes renforts 38, appelés cadres, étant positionnés dans des plans transversaux. Bien entendu, l'invention n'est pas limitée au fuselage et peut s'appliquer à d'autres parties de l'aéronef.

La paroi extérieure 32 sépare une zone intérieure ZI et une zone extérieure ZE, la structure primaire 34 étant située dans la zone intérieure ZI.

L'aéronef comprend au moins une platine 40 positionnée dans la zone extérieure ZE ainsi qu'au moins un système de liaison 42 reliant la platine 40 et la structure primaire 34. Contrairement à l'art antérieur, la platine 40 n'est pas reliée à la paroi extérieure 32 mais à la structure primaire 34. Cette dernière est plus rigide que la paroi extérieure 32. Ainsi, en fonctionnement, la platine 40 n'est pas soumise aux contraintes liées aux déformations de la paroi extérieure 32 produites en raison de la pressurisation de la zone intérieure ZI.

Selon une application, au moins une antenne est fixée sur la platine 40.

Le système de liaison 42 comprend au moins une partie 44 reliée à la structure primaire 34 par des éléments de fixation 46. Selon une configuration, au moins un élément de fixation 46 reliant la première partie 44 du système de liaison 42 et la structure primaire 34 est un élément de fixation 39 reliant la paroi extérieure 32 et la structure primaire 34. Ainsi, les mêmes éléments de fixation 39, 46 relient la première partie 44, la paroi extérieure 32 et la structure primaire 34, la paroi extérieure 32 étant intercalée entre la première partie 44 du système de liaison 42 et la structure primaire 34. Selon un agencement, tous les éléments de fixation 46 du système de liaison 42 utilisés pour relier la platine 40 à la structure primaire 34 sont des éléments de fixation 39 reliant la paroi extérieure 32 et la structure primaire 34. Ainsi, la paroi extérieure 32 ne comprend pas d'orifices traversants exclusivement dédiés à la liaison entre la platine 40 et la structure primaire 34. Le plus grand nombre d'éléments de fixation 39 existants, reliant la paroi extérieure 32 et la structure primaire 34, sont utilisés pour relier la platine 40 et la structure primaire 34, ce qui permet de réduire la masse embarquée et de réduire le nombre d'orifices traversant la paroi extérieure 32.

Selon une configuration, la platine 40 présente une extrémité avant 40.1, une extrémité arrière 40.2 ainsi que des premier et deuxième bords longitudinaux 48.1, 48.2 reliant les extrémités avant et arrière 40.1, 40.2. Ces dernières ainsi que les premier et deuxième bords longitudinaux 48.1, 48.2 sont configurés pour réduire la traînée de la platine 40. A titre d'exemple, l'extrémité avant 40.1 peut être arrondie et les premier et deuxième bords longitudinaux 48.1, 48.2 peuvent être sensiblement parallèles à la direction longitudinale. Bien entendu, l'invention n'est pas limitée à cette configuration pour la platine 40.

Selon un mode de réalisation, l'aéronef comprend au moins un premier système de liaison 42 relié à au moins un premier renfort 36 et configuré pour assurer une reprise des efforts selon au moins la première direction X ainsi qu'au moins un deuxième système de liaison 42' relié à au moins un deuxième renfort 38 et configuré pour assurer une reprise des efforts selon au moins la deuxième direction Y. Cette solution permet d'optimiser la reprise des efforts entre la platine 40 et la structure primaire 34.

Selon un mode de réalisation, l'aéronef comprend un unique premier système de liaison 42 relié à au moins un premier renfort 36 et configuré pour assurer une reprise des efforts selon au moins la première direction X, au moins un deuxième système de liaison 42' relié à au moins un deuxième renfort 38 et configuré pour assurer une reprise des efforts selon au moins la deuxième direction Y ainsi qu'au moins un troisième système de liaison 42" relié à au moins un deuxième renfort 38 et configuré pour assurer une reprise des efforts selon au moins la deuxième direction Y.

Selon un agencement, le premier système de liaison 42 est situé à proximité de l'extrémité avant 40.1 de la platine, à équidistance des premier et deuxième bords longitudinaux 48.1, 48.2. Chaque deuxième système de liaison 42' est situé à proximité du premier bord longitudinal 48.1. Selon une configuration, deux deuxièmes systèmes de liaison 42' sont alignés selon une direction parallèle à la direction longitudinale, à proximité du premier bord longitudinal 48.1. Chaque troisième système de liaison 42" est situé à proximité du deuxième bord longitudinal 48.2. Selon une configuration, deux troisièmes systèmes de liaison 42" sont alignés selon une direction parallèle à la direction longitudinale, à proximité du deuxième bord longitudinal 48.2.

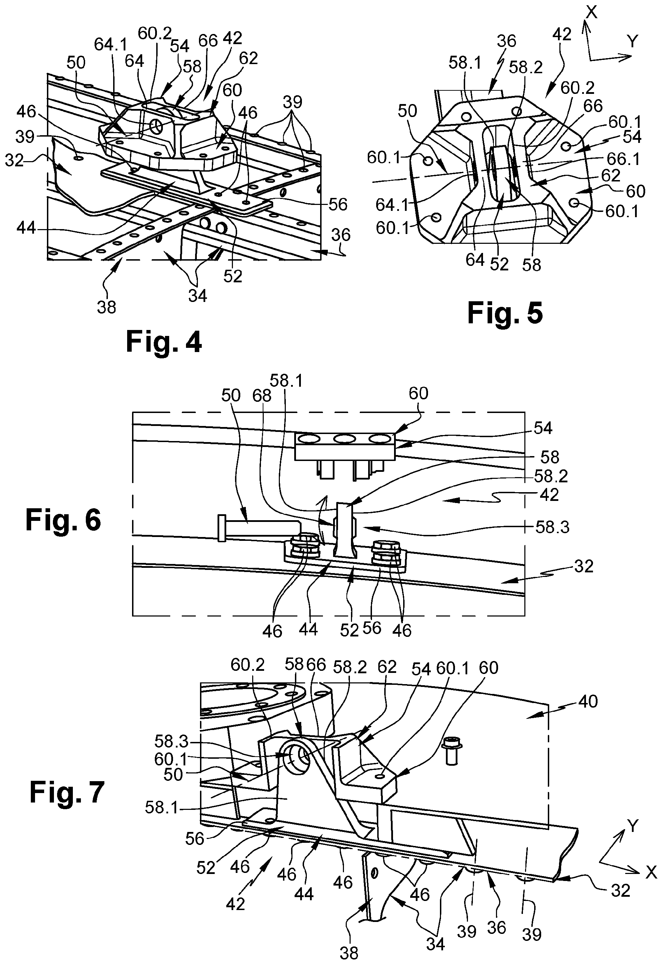

Selon une configuration visible sur les figures 4 à 7, le premier système de liaison 42 comprend au moins un axe de pivotement 50 orienté perpendiculairement à la première direction X (ou parallèlement à la deuxième direction Y). Le premier système de liaison 42 comprend une première partie 52 solidaire de la structure primaire 34 ainsi qu'une deuxième partie 54 solidaire de la platine 40, les première et deuxième parties 52, 54 étant reliées par l'axe de pivotement 50.

Selon un mode de réalisation, la première partie 52 est une ferrure reliée par des éléments de fixation 39, 46 reliant la paroi extérieure 32 et la structure primaire 34. La première partie 52 présente une embase 56 plaquée contre la paroi extérieure 32 et reliée à la structure primaire 34 par des éléments de fixation 39, 46 ainsi qu'une aile 58 présentant deux faces parallèles 58.1, 58.2 sensiblement parallèles entre elles et à la première direction X. Un orifice traversant 58.3 traverse l'aile 58 et débouche au niveau des deux faces 58.1, 58.2, l'orifice traversant 58.3 étant orienté selon une direction sensiblement parallèle à la deuxième direction Y. L'embase 56 et l'aile 58 forment une unique et même pièce.

Selon un mode de réalisation, la deuxième partie 54 comprend :
- une embase 60, reliée à la platine 40 par des éléments de fixation 60.1, qui comporte un orifice traversant 60.2 pour permettre le passage de l'aile 58 de la première partie 52,
- un corps 62 creux, configuré pour loger l'aile 58 de la première partie 52, qui présente des première et deuxième parois 64, 66 parallèles entre elles,
- des orifices traversants 64.1, 66.1 coaxiaux, configurés pour loger l'axe de pivotement 50, qui traversent les première et deuxième parois 64, 66.

Les première et deuxième parois 64, 66 sont espacées entre elles d'une distance supérieure à l'épaisseur (distance entre les faces 58.1, 58.2) de l'aile 58 de la première partie 54. Ainsi, les première et deuxième parties 52, 54 peuvent se déplacer l'une par rapport à l'autre selon la deuxième direction Y. Ainsi, les première et deuxième parties 52, 54 ainsi que l'axe de pivotement 50 sont configurés pour former une liaison pivot glissant qui permet un déplacement entre les première et deuxième parties 52, 54 parallèle à la deuxième direction Y.

Selon une configuration visible sur la figure 6, une rotule 68 est intercalée entre l'orifice traversant 60.2 de l'aile 58 et l'axe de pivotement 50. Ainsi, des mouvements de rotation autour d'axes de rotation orientés selon trois directions orthogonales sont possibles entre les première et deuxième parties 52, 54. Ainsi, les première et deuxième parties 52, 54 ainsi que l'axe de pivotement 50 sont configurés pour former une liaison rotule.

Selon cette configuration, le premier système de liaison 42 est configuré pour assurer la reprise des efforts selon la première direction X ainsi que selon une troisième direction Z perpendiculaire à la paroi extérieure 32 et autoriser des mouvements de rotation entre la platine 40 et la première structure primaire 34 ainsi que des mouvements de translation selon la deuxième direction Y.

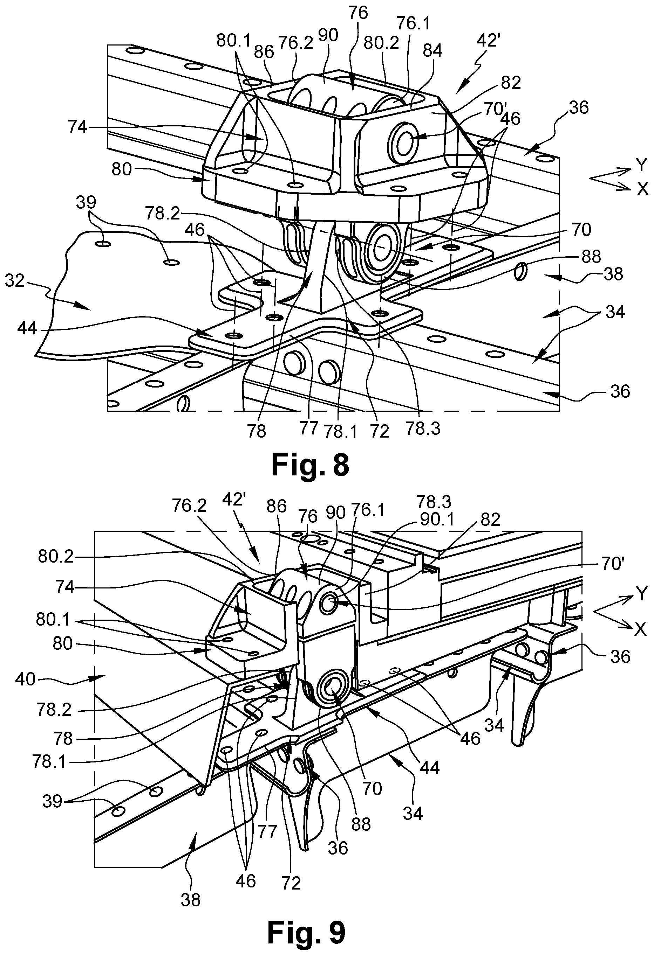

Selon un agencement visible sur les figures 8 à 11, chacun des deuxième et troisième systèmes de liaison 42', 42" est positionné au niveau d'une intersection de premier et deuxième renforts 36, 38.

Selon un mode de réalisation visible sur les figures 8 et 9, le deuxième système de liaison 42' comprend au moins un axe de pivotement 70 orienté perpendiculairement à la deuxième direction Y (ou parallèlement à la première direction X). Le deuxième système de liaison 42' comprend une première partie 72 solidaire de la structure primaire 34 ainsi qu'une deuxième partie 74 solidaire de la platine 40, les première et deuxième parties 72, 74 étant reliées par une biellette 76 reliée à la première partie 72 par un premier axe de pivotement 70 orienté parallèlement à la première direction X et à la deuxième partie 74 par un deuxième axe de pivotement 70' orienté parallèlement à la première direction X. Cette biellette 76 permet d'augmenter l'ampleur des mouvements possibles entre la structure primaire 34 et la platine 40.

Selon une configuration, la première partie 72 est une ferrure reliée par des éléments de fixation 39, 46 reliant la paroi extérieure 32 et la structure primaire 34. La première partie 72 présente une embase 77 plaquée contre la paroi extérieure 32 et reliée à la structure primaire 34 par des éléments de fixation 46 ainsi qu'une aile 78 présentant deux faces parallèles 78.1, 78.2 sensiblement parallèles entre elles et à la deuxième direction Y. Un orifice traversant 78.3 traverse l'aile 78 et débouche au niveau des deux faces 78.1, 78.2, cet orifice traversant 78.3 étant orienté selon une direction sensiblement parallèle à la première direction X. L'embase 77 et l'aile 78 forment une unique et même pièce.

Selon une configuration, la deuxième partie 74 comprend :
- une embase 80, reliée à la platine 40 par des éléments de fixation 80.1, qui comporte un orifice 80.2 pour permettre le passage de la biellette 76,
- un corps 82 creux, configuré pour loger la biellette 76, qui présente des première et deuxième parois 84, 86 parallèles entre elles,
- des orifices traversants coaxiaux, configurés pour loger le deuxième axe de pivotement 70', qui traversent les première et deuxième parois 84, 86.

La biellette 76 s'étend entre des première et deuxième extrémités 88, 90 et présente deux faces latérales 76.1, 76.2 sensiblement parallèles entre elles et perpendiculaires à la première direction X.

La deuxième extrémité 90 comporte un orifice traversant 90.1, configuré pour loger le deuxième axe de pivotement 70', qui débouche au niveau des faces latérales 76.1, 76.2.

Les première et deuxième parois 84, 86 de la deuxième partie 74 sont espacées d'une distance supérieure à l'épaisseur de la biellette 76, qui correspond à la distance entre les deux faces latérales 76.1, 76.2 au droit de l'orifice traversant 90.1. Ainsi, la deuxième partie 74, la biellette 76 et le deuxième axe de pivotement 70' sont configurés pour former une liaison pivot glissant permettant un déplacement entre la deuxième partie 74 et la biellette 76 parallèle à la première direction X.

La première extrémité 88 de la biellette 76 comprend deux branches espacées qui forment une chape configurée pour coopérer avec l'aile 78 de la première partie 72, les branches de la biellette 76 étant traversées par des orifices configurés pour loger le premier axe de pivotement 70. Les orifices traversant l'aile 78 de la première partie 72 et les branches de la biellette 76 sont configurés pour loger le premier axe de pivotement 70 de manière à former une liaison pivot selon la première direction X.

Les branches de la biellette 76 sont espacées d'une distance supérieure à l'épaisseur de l'aile 78 de la première partie 72. Ainsi, la première partie 72, la biellette 76 et le premier axe de pivotement 70 sont configurés pour former une liaison pivot glissant qui permet un déplacement entre la première partie 72 et la biellette 76 parallèle à la première direction X. Selon une configuration, une rotule peut être intercalée entre l'orifice traversant de l'aile 78 et le premier axe de pivotement 70.

Selon le mode de réalisation visible sur les figures 8 et 9, les première et deuxième parties 72, 74 de chaque deuxième système de liaison 42' sont reliées par une biellette 76 et deux axes de pivotement 70, 70' parallèles entre eux et à la première direction X. Ainsi, chaque deuxième système de liaison 42' assure la reprise des efforts uniquement selon la troisième direction Z et permet des déplacements entre la platine 40 et la première structure primaire 34 selon les première et deuxième directions X, Y.

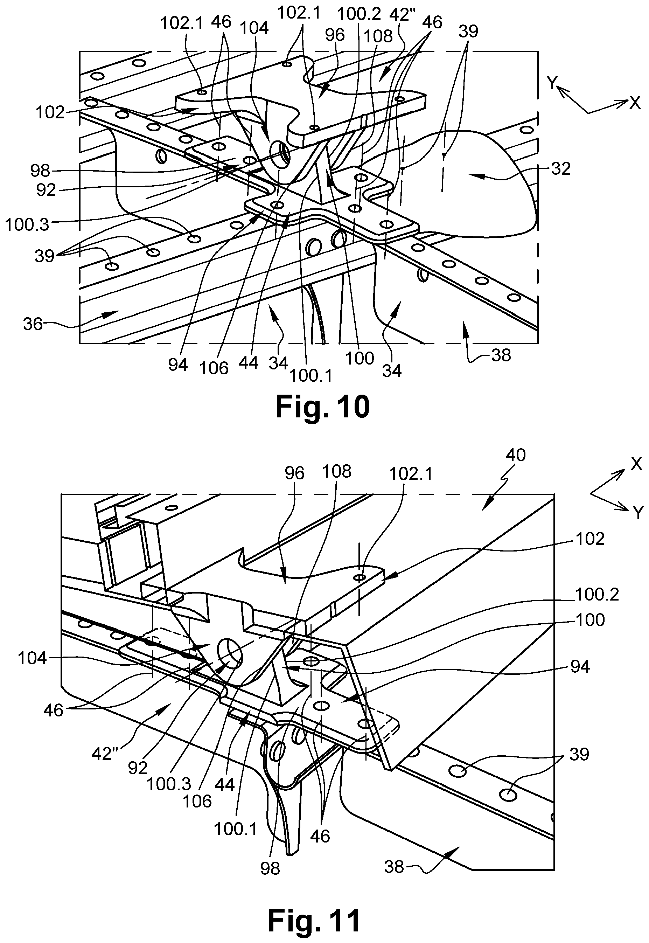

Selon un mode de réalisation visible sur les figures 10 et 11, chaque troisième système de liaison 42" comprend au moins un axe de pivotement 92 orienté perpendiculairement à la deuxième direction Y (ou parallèlement à la première direction X). Le troisième système de liaison 42" comprend une première partie 94 solidaire de la structure primaire 34 ainsi qu'une deuxième partie 96 solidaire de la platine 40, les première et deuxième parties 94, 96 étant reliées par l'axe de pivotement 92.

Selon un mode de réalisation, la première partie 94 est une ferrure reliée par des éléments de fixation 39, 46 reliant la paroi extérieure 32 et la structure primaire 34. La première partie 94 présente une embase 98 plaquée contre la paroi extérieure 32 et reliée à la structure primaire 34 par des éléments de fixation 39, 46 ainsi qu'une aile 100 présentant deux faces parallèles 100.1, 100.2 sensiblement parallèles entre elles et à la deuxième direction Y. Un orifice traversant 100.3 traverse l'aile 100 et débouche au niveau des deux faces 100.1, 100.2, cet orifice traversant 100.3 étant orienté selon une direction sensiblement parallèle à la première direction X et configuré pour loger l'axe de pivotement 92. L'embase 98 et l'aile 100 forment une unique et même pièce.

Selon une configuration, une rotule peut être intercalée entre l'orifice traversant de l'aile 100 et l'axe de pivotement 92.

Selon un mode de réalisation, la deuxième partie 96 comprend :
- une embase 102 reliée à la platine 40 par des éléments de fixation 102.1,
- une chape 104 comportant deux branches 106, 108 parallèles entre elles et à la deuxième direction Y, traversées par des orifices traversants coaxiaux et configurés pour loger l'axe de pivotement 92.

Les première et deuxième branches 106, 108 sont espacées entre elles d'une distance supérieure à l'épaisseur (distance entre les faces 100.1, 100.2) de l'aile 100 de la première partie 94. Ainsi, les première et deuxième parties 94, 96 peuvent se déplacer l'une par apport à l'autre selon la première direction X. Ainsi, les première et deuxième parties 94, 96 ainsi que l'axe de pivotement 92 sont configurés pour former une liaison pivot glissant qui permet un déplacement entre les première et deuxième parties 94, 96 parallèle à la première direction X. Selon cette configuration, chaque troisième système de liaison 42" est configuré pour assurer la reprise des efforts selon les deuxième et troisième directions Y, Z et permettre des mouvements selon la première direction X entre la platine 40 et la structure primaire 34. Selon une configuration visible sur les figures 2 et 3, au moins un couple de deuxième et troisième systèmes de liaison 42', 42" est relié au même deuxième renfort 38. Selon l'agencement visible sur la figure 2, un premier couple de deuxième et troisième systèmes de liaison 42', 42" est positionné sur un deuxième renfort 38 et un deuxième couple de deuxième et troisième systèmes de liaison 42', 42" est positionné sur un autre deuxième renfort 38. Quel que soit le mode de réalisation, la platine 40 peut être aisément démontée en retirant pour chaque système de liaison 42, 42', 42" au moins un axe de pivotement 50, 70, 70', 92 reliant les première et deuxième parties 52, 54, 72, 74, 94, 96.

## Revendications

1. Aéronef comportant :
- une paroi extérieure (32) séparant des zones intérieure et extérieure (ZI, ZE),
- une structure primaire (34), positionnée dans la zone intérieure (ZI), comportant une pluralité de premiers renforts (36) orientés selon une première direction (X) et une pluralité de deuxièmes renforts (38) orientés selon une deuxième direction (Y) sensiblement perpendiculaire à la première direction (X),
- des éléments de fixation (39) reliant la paroi extérieure (32) et la structure primaire (34),
- une platine (40) positionnée dans la zone extérieure (ZE),
**caractérisé en ce que** la platine (40) est reliée à la structure primaire (34) par au moins un système de liaison (42, 42', 42").

2. Aéronef selon la revendication précédente, **caractérisé en ce que** le système de liaison (42) comprend au moins une partie (44) reliée à la structure primaire (34) par des éléments de fixation (46), au moins un des éléments de fixation (46) étant un élément de fixation (39) reliant la paroi extérieure (32) et la structure primaire (34).

3. Aéronef selon l'une des revendications précédentes, **caractérisé en ce que** l'aéronef comprend au moins un premier système de liaison (42) relié à au moins un premier renfort (36) et configuré pour assurer une reprise des efforts selon au moins la première direction (X) ainsi qu'au moins un deuxième système de liaison (42') relié à au moins un deuxième renfort (38) et configuré pour assurer une reprise des efforts selon au moins la deuxième direction (Y).

4. Aéronef selon la revendication précédente, **caractérisé en ce que** le premier système de liaison (42) comprend une première partie (52) solidaire de la structure primaire (34), une deuxième partie (54) solidaire de la platine (40) ainsi qu'au moins un axe de pivotement (50), orienté parallèlement à la deuxième direction (Y), reliant les première et deuxième parties (52, 54).

5. Aéronef selon la revendication précédente, **caractérisé en ce que** les première et deuxième parties (52, 54) ainsi que l'axe de pivotement (50) sont configurés pour former une liaison pivot glissant qui permet un déplacement entre les première et deuxième parties (52, 54) parallèle à la deuxième direction (Y).

6. Aéronef selon l'une des revendications 4 à 5, **caractérisé en ce que** les première et deuxième parties (52, 54) ainsi que l'axe de pivotement (50) sont configurés pour former une liaison rotule.

7. Aéronef selon l'une des revendications 3 à 6, **caractérisé en ce que** le deuxième système de liaison (42') comprend une première partie (72) solidaire de la structure primaire (34), une deuxième partie (74) solidaire de la platine (40), une biellette (76), un premier axe de pivotement (70), orienté parallèlement à la première direction (X), reliant la première partie (72) et la biellette (76) ainsi qu'un deuxième axe de pivotement (70'), orienté parallèlement à la première direction (X), reliant la deuxième partie (74) et la biellette (76).

8. Aéronef selon la revendication précédente, **caractérisé en ce que** la deuxième partie (74), la biellette (76) et le deuxième axe de pivotement (70') sont configurés pour former une liaison pivot glissant qui permet un déplacement, entre la deuxième partie (74) et la biellette (76), parallèle à la première direction (X).

9. Aéronef selon l'une des revendications 7 à 8, **caractérisé en ce que** la première partie (72), la biellette (76) et le premier axe de pivotement (70) sont configurés pour former une liaison pivot glissant qui permet un déplacement, entre la première partie (72) et la biellette (76), parallèle à la première direction (X).

10. Aéronef selon l'une des revendications précédentes, **caractérisé en ce que** la platine (40) présente une extrémité avant (40.1), une extrémité arrière (40.2) ainsi que des premier et deuxième bords longitudinaux (48.1, 48.2) reliant les extrémités avant et arrière (40.1, 40.2) et **en ce que** l'aéronef comprend un unique premier système de liaison (42) relié à au moins un premier renfort (36) et configuré pour assurer une reprise des efforts selon au moins la première direction (X), au moins un deuxième système de liaison (42') relié à au moins un deuxième renfort (38), configuré pour assurer une reprise des efforts selon au moins la deuxième direction (Y) et situé à proximité du premier bord longitudinal (48.1), ainsi qu'au moins un troisième système de liaison (42") relié à au moins un deuxième renfort (38), configuré pour assurer une reprise des efforts selon au moins la deuxième direction (Y) et situé à proximité du deuxième bord longitudinal (48.2).

11. Aéronef selon la revendication précédente, **caractérisé en ce que** chaque troisième système de liaison (42") comprend une première partie (94) solidaire de la structure primaire (34), une deuxième partie (96) solidaire de la platine (40) ainsi qu'au moins un axe de pivotement (92), orienté parallèlement à la première direction (X), reliant les première et deuxième parties (94, 96).

12. Aéronef selon la revendication précédente, **caractérisé en ce que** les première et deuxième parties (94, 96) ainsi que l'axe de pivotement (92) sont configurés pour former une liaison pivot glissant qui permet un déplacement entre les première et deuxième parties (94, 96) parallèle à la première direction (X).

13. Aéronef selon l'une des revendications 10 à 12, **caractérisé en ce que** l'aéronef comprend au moins un couple de deuxième et troisième systèmes de liaison (42', 42") relié au même deuxième renfort (38).
